# EUROPEAN PATENT SPECIFICATION

(11) **EP 2 666 579 B1**
(45) Date of publication and mention of the grant of the patent: **17.04.2019**
(21) Application number: 13167365.9
(22) Date of filing: 10.05.2013
(51) Int. Cl.: B23K 26/14, B23K 28/02

(54) **Hybrid laser arc welding process and apparatus**
Hybrides Laserlichtbogenschweißverfahren und Vorrichtung
Procédé de soudure à l'arc laser hybride et appareil

(30) Priority: 21.05.2012 US 201213476458
(43) Date of publication of application: 27.11.2013
(73) Proprietor: General Electric Company, Schenectady, NY 12345 (US)
(72) Inventor: Lin, Dechao, Greenville, SC 29615 (US); Cui, Yan, Greenville, SC 29615 (US); Bucci David Vincent, Greenville, SC 29615 (US); Kottilingam, Srikanth Chandrudu, Greenville, SC 29615 (US)
(74) Representative: Katzka, Catherine

(56) References cited:
- EP-A1- 2 322 312
- JP-A- 2001 096 384
- US-A1- 2004 000 539
- US-A1- 2010 288 738

## Description

The present invention generally relates to welding methods. More particularly, this invention is directed to a welding process that utilizes a hybrid laser arc welding technique in which laser beam welding and arc welding simultaneously occur in the same weld pool wherein at least one lateral laser beam is capable of promoting a smooth transition at the weld bead toes along the lateral edges of the resulting weld joint.

Low-heat input welding processes, and particularly high-energy beam welding processes such as laser beam and electron beam welding (LBW and EBW, respectively) operated over a narrow range of welding conditions, have been successfully used to produce crack-free weld joints in a wide variety of materials, including but not limited to alloys used in turbomachinery. An advantage of high-energy beam welding processes is that the high energy density of the focused laser or electron beam is able to produce deep narrow weld beads of minimal weld metal volume, enabling the formation of structural butt weld joints that add little additional weight and cause less component distortion in comparison to other welding techniques, such as arc welding processes. Additional advantages particularly associated with laser beam welding include the ability to be performed without a vacuum chamber or radiation shield usually required for electron beam welding. Consequently, laser beam welding can be a lower cost and more productive welding process as compared to electron beam welding.

Though filler materials have been used for certain applications and welding conditions, laser beam and electron beam welding processes are typically performed autogenously (no additional filler metal added). The high-energy beam is focused on the surface to be welded, for example, an interface (weld seam) between two components to be welded. During welding, the surface is sufficiently heated to vaporize a portion of the metal, creating a cavity ("keyhole") that is subsequently filled by the molten material surrounding the cavity. A relatively recent breakthrough advancement in laser beam welding is the development of high-powered solid-state lasers, which as defined herein include power levels of greater than four kilowatts and especially eight kilowatts or more. Particular examples are solid-state lasers that use ytterbium oxide (Yb₂O₃) in disc form (Yb:YAG disc lasers) or as an internal coating in a fiber (Yb fiber lasers). These lasers are known to be capable of greatly increased efficiencies and power levels, for example, from approximately four kilowatts to over twenty kilowatts.

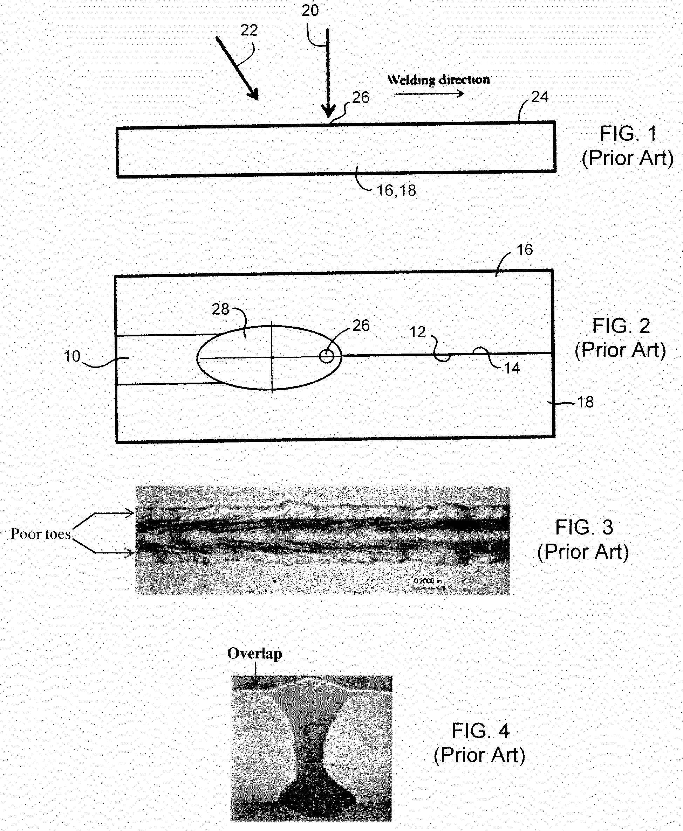

Hybrid laser arc welding (HLAW), also known as laser-hybrid welding, is a process that combines laser beam and arc welding techniques, such that both welding processes simultaneously occur in the same molten weld pool. An example of an HLAW process is schematically represented in FIGS. 1 and 2 as being performed to produce a butt weld joint 10 between faying surfaces 12 and 14 of two workpieces 16 and 18. As evident from FIG. 1, a laser beam 20 is oriented perpendicular to adjacent surfaces 24 of the workpieces 16 and 18, while an electric arc 22 and filler metal (not shown) of the arc welding process are positioned behind (aft) and angled forward toward the focal point 26 of the laser beam 20 on the workpiece surfaces 24. The arc welding process may be, for example, gas metal arc welding (GMAW, also known as metal inert gas (MIG) welding) or gas tungsten arc welding (GTAW, also known as tungsten inert gas (TIG) welding, and generates what will be referred to herein as an arc projection 28 that is projected onto the workpiece surfaces 24. The aft position of the arc welding process is also referred to as a "forehand" welding technique, and the resulting arc projection 28 is shown as encompassing the focal point 26 of the laser beam 20. The resulting molten weld pool (not shown) produced by the laser beam 20 and electric arc 22 generally lies within the arc projection 28 or is slightly larger than the arc projection 28.

Benefits of the HLAW process include the ability to increase the depth of weld penetration and/or increase productivity by increasing the welding process travel speed, for example, by as much as four times faster than conventional arc welding processes. These benefits can be obtained when welding a variety of materials, including nickel-based, iron-based alloys, cobalt-based, copper-based, aluminum-based, and titanium-based alloys used in the fabrication of various components and structures, including the construction of wind turbine towers used in power generation applications, as well as components and structures intended for a wide variety of other applications, including aerospace, infrastructure, medical, industrial applications, etc.

Even though laser beam welding is known to have benefits as noted above, limitations may occur when welding certain materials. As a nonlimiting example, molten weld pools formed in nickel-based superalloys tend to exhibit lower fluidity and reduced wetting than other metallic materials, such as mild steels, stainless steels and low-alloy steels. This "sluggishness" can lead to defects in the resulting weld joint, for example, overlapping defects in the region of the weld bead referred to herein as the weld bead toes or simply weld toes. FIGS. 3 and 4 are images showing a weld bead produced by an HLAW process and having an overlapping weld defect characterized by irregular lateral edges. As evident from FIGS. 3 and 4, the irregular edges of the weld bead are defined by the weld toes, which overlap the adjacent base material of the components welded together by the weld bead to define transition regions between the weld bead and the base material.

Various conventional systems and welding methods are described, for example, in US 2010/0288738 and JP 2001 096384.

Reducing or eliminating irregular weld toes in weld joints produced by HLAW processes would be particularly advantageous from the standpoint of achieving longer lives for components subjected to cyclic operations. One commercial example is the fabrication of wind turbine towers, whose fabrication requires butt weld joints to join very long and thick sections of the towers.

Various aspects and embodiments of the present invention are defined by the appended claims.

Other aspects and advantages of this invention will be better appreciated from the following detailed description, and drawings, in which:
FIGS. 1 and 2 are schematic representations showing side and plan views, respectively, of two workpieces abutted together and undergoing a hybrid laser arc welding process in accordance with the prior art.
FIGS. 3 and 4 are images showing plan and cross-sectional views, respectively, of a weld joint produced by a hybrid laser arc welding process of the type represented in FIGS. 1 and 2.
FIGS. 5 and 6 are schematic representations showing side and plan views, respectively, of two workpieces abutted together and undergoing a hybrid laser arc welding process in accordance with an embodiment of the present invention.
FIG. 7 is a schematic representation of a laser welding apparatus suitable for use in the hybrid laser arc welding process represented in FIGS. 5 and 6.
FIGS. 8 through 11 are images showing cross-sectional views of weld joints produced by experimental hybrid laser arc welding processes.

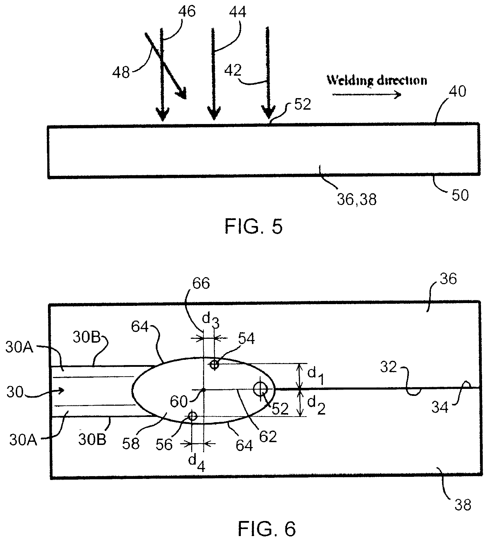

FIGS. 5 and 6 represent a welding process that utilizes multiple laser beams in a hybrid laser arc welding (HLAW) process in accordance with an embodiment of the present invention. In particular, the process combines laser beam and arc welding techniques, such that both welding processes simultaneously occur in the same molten weld pool. As schematically represented in FIGS. 5 and 6, the welding process can be performed to produce a butt weld joint 30 between faying surfaces 32 and 34 of two workpieces 36 and 38 to form a welded assembly, though it should be understood that the process is not limited to butt weld joints and any number of workpieces can be welded together. Each faying surface 32 and 34 is contiguous with an adjacent surface 40 of one of the workpieces 36 and 38. With a corresponding surface 50 on the opposite side of each workpiece 36 and 38, the workpiece surfaces 40 define the through-thicknesses of the workpieces 36 and 38.

The invention may use various arc welding processes, for example, gas shielded arc welding, including gas tungsten arc welding (GTAW, or tungsten inert gas (TIG)), which uses a nonconsumable tungsten electrode, and gas metal arc welding (GMAW, or metal inert gas (MIG)), which uses a consumable electrode formed of the weld alloy to be deposited. These welding techniques involve the application of a sufficient electric potential between the electrode and substrate to be welded to generate an electric arc therebetween. Because the electrodes of GTAW techniques are not consumed, a wire of a suitable filler alloy must be fed into the arc, where it is melted and forms metallic drops that deposit onto the substrate surface. In contrast, the consumable electrode of a GMAW technique serves as the source of filler material for the overlay weld. Various materials can be used as a filler material, with preferred materials depending on the compositions of the workpieces 36 and 38 and the intended application. For example, a ductile filler may be preferred to reduce the tendency for cracking in the weld joint 30, or a filler may be used whose chemistry closely matches the base metal (or metals) of the workpieces 36 and 38 to more nearly maintain the desired properties of the workpieces 36 and 38.

The laser welding process employed in FIGS. 5 and 6 preferably utilizes a least one high-powered laser as the source of any one or more of the laser beams 42, 44 and 46. Preferred high-powered lasers are believed to include solid-state lasers that use ytterbium oxide (Yb₂O₃) in disc form (Yb:YAG disc lasers) or as an internal coating in a fiber (Yb fiber lasers). Typical parameters for the high-powered laser welding process include a power level of up to four kilowatts, for example, up to eight kilowatts and possibly more, and laser beam diameters in a range of about 300 to about 600 micrometers. Other suitable operating parameters, such as pulsed or continuous mode of operation and travel speeds, can be ascertained without undue experimentation. Control of the laser(s) can be achieved with any suitable robotic machinery or CNC gantry system. Consistent with laser beam welding processes and equipment known in the art, the laser beams 42, 44 and 46 do not require a vacuum or inert atmosphere, though the process preferably uses a shielding gas, for example, an inert shielding gas, active shielding gas, or a combination thereof to form a mixed shielding gas.

Though not represented in FIGS. 5 and 6, it is within the scope of the invention to provide a shim between the faying surfaces 32 and 34 of the workpieces 36 and 38. The shim can be utilized to provide fill metal for the weld joint 30, and/or provide additional benefits as described in U.S. Published Patent Application No. 2010/0243621, for example, stabilizing the weld keyhole to reduce spattering and discontinuities during high-powered laser beam welding.

As depicted in FIG. 5, the three laser beams 42, 44 and 46 are preferably projected in a direction normal to the workpiece surfaces 40, although it is foreseeable that the laser beams 42, 44 and 46 may be projected at an angle of about 70 to about 110 degrees to the adjacent workpiece surfaces 40 of the workpieces 36 and 38. For example, laser beams 42, 44 and 46 may be tilted relative to the workpiece surfaces 40 to be used in some applications to mitigate laser beam reflection and reduce spattering from a molten pool (not shown) so as to increase laser head life. An electric arc 48 and filler metal (not shown) of the arc welding process are positioned behind (aft) and angled forward toward a focal point of the laser beam 42 that generates a beam projection 52 on the workpiece surfaces 40. The arc welding process generates an arc projection 58 on the workpiece surfaces 40 that encompasses the beam projection 52 of the laser beam 42, as well as the beam projections 54 and 56 of the laser beams 44 and 46. The resulting molten weld pool produced by the laser beams 42, 44 and 46 and the electric arc 48 generally lie within the arc projection 58 or is slightly larger than the arc projection 58.

On the basis of FIGS. 5 and 6, the hybrid laser arc welding process comprises multiple welding steps that are performed in sequence, with a first of the processes being performed by the laser beam 42 to preferably yield a relatively deep-penetrating weld. The laser beam projection 52 and the center 60 of the arc projection 58 are represented as being projected onto a line 62 that coincides with a joint region defined by and between the faying surfaces 32 or 34 (or any gap therebetween), whereas the projections 54 and 56 of the lateral laser are spaced laterally apart from the joint region (faying surfaces 32 and 34). In combination, the laser beam 42 and the electric arc 48 are intended to generate the primary welding effect, meaning that the molten weld pool and the resulting deep-penetrating weld joint 30 that metallurgically joins the workpieces 36 and 38 is predominantly if not entirely produced by the combined effect of the laser beam 42 and the electric arc 48. To create the desired molten weld pool, a center point of the projection 52 of laser beam 42 and the center 60 of the arc projection 58 of the electric are 48 should be between about 2 to about 20 millimeters apart along the joint to be welded, more preferably about 5 to about 15 millimeters. To mitigate laser power loss and not to disturb metal transfer in the arc, the laser beam 42 has to keep a minimum spacing to the arc. In addition, too large of spacing, for example more than 20 millimeters, may lose the synergy of the laser beam 42 and the electric arc 48. To penetrate thick sections, for example, one centimeter or more, the laser beam 42 is preferably generated with a power level of about 2 kW or more, preferably about 4 kW or more, and more preferably about 8 or more. A suitable upper limit is believed to be about 20 kW for workpiece surfaces 40 having a thickness of more than one centimeter. A more stable keyhole (a resulting hole that is formed when the sides of the workpiece surfaces 40 melt away on each side of the weld pool) can be achieved by increasing power in laser beam 42, therefore a thicker material can be fully penetrated in a single pass with laser hybrid welding. In contrast, the laser beams 44 and 46 do not intentionally penetrate the through-thicknesses of the workpieces 36 and 38, and instead are intended to interact with the molten weld pool formed by the leading laser beam 42 and electric arc 48. For this reason, the laser beams 44 and 46 can be operated at power levels less than that of the laser beam 42. The projections 52, 54, 56 and 58 of the laser beams 42, 44 and 46 and electric arc 48 are all caused to simultaneously travel, preferably in unison, in a welding direction as indicated in FIG. 5.

Welding processes of the type represented in FIGS. 5 and 6 are particularly well suited for fabricating components that require welding relative thick sections, for example, one centimeter or more, as is the case for fabricating various components used in power generation applications, including the construction of wind turbine towers, as well as components intended for a wide variety of other applications, including aerospace, infrastructure, medical, industrial applications, etc. The workpieces 36 and 38 may be castings, wrought, or powder metallurgical form, and may be formed of a variety of materials, nonlimiting examples of which include nickel-based, iron-based alloys, cobalt-based, copper-based, aluminum-based, and titanium-based alloys. However, certain advantages associated with this invention are particularly beneficial when welding workpieces formed of materials that exhibit lower fluidity and reduced wetting than mild, stainless and low-alloy steels, notable examples of which include nickel-based superalloys. In particular, the additional laser beams 44 and 46 are preferably utilized so that their respective projections 54 and 56 are projected near or onto the lateral edges 64 of the molten weld pool created and temporarily sustained by the leading laser beam 42 and electric arc 48, and prior to solidification of the molten weld that results in the weld joint 30. More particularly, the laser beam projections 54 and 56 serve to mix and churn the molten weld material that defines the lateral edges 64 of the molten weld pool for the purpose of having a smoothing effect within the weld toes 30A that define the outermost lateral edges 30B of the weld 30 joint. Such an effect is intended to promote longer a life for the weld joint 30 if subjected to cyclic operations.

To achieve the above-noted smoothing effect on the lateral edges 30B of the weld joint 30, the power levels of the laser beams 42, 44 and 46 and the diameters and placements of their projections 52, 54 and 56 are preferably controlled. As previously noted, in order to penetrate the through-thickness of the workpieces 36 and 38, the leading laser beam 42 is preferably generated at a higher power level than the additional laser beams 44 and 46. To achieve a similar smoothing effect within each weld toe 30A and along each lateral edge 30B of the weld joint 30, the additional laser beams 44 and 46 are preferably generated at the same power level and the diameters of their projections 54 and 56 are preferably the same or are within at least 50 percent of each other. On the other hand, the leading laser beam 42 will typically be at a power level of at least 200 percent higher, and more preferably about 400 to 1000 percent higher, than either laser beam 44 and 46, which is intended to ensure than the laser beams 44 and 46 do not penetrate the workpieces 36 and 38. However, it should be understood that optimal power levels for the laser beams 42, 44 and 46, as well as optimal diameters for their respective projections 52, 54 and 56, will depend on the particular materials being welded and other factors capable of affecting the welding process.

The placements of the beam projections 54 and 56 are preferably controlled relative to the projection 58 of the electric arc 48. The lateral offset distances between the laser beam projections 54 and 56 and the leading laser beam projection 52 (perpendicular to the welding direction) are indicated by "d₁" and "d₂" in FIG. 6, and the longitudinal offset distances between the laser beam projections 54 and 56 and the center 60 of the projection 58 (parallel to the welding direction) are indicated by "d₃" and "d₄" in FIG. 6. While the distances d₁ and d₂ associated with both projections 54 and 56 are represented as being identical, it is foreseeable that either or both of these distances could differ among the projections 54 and 56. Furthermore, while the projections 54 and 56 are represented as being forward and aft, respectively, of a lateral line 66 through the center 60 of the arc projection 58, it is foreseeable that the either or both of the projections 54 and 56 could be forward or aft of the lateral line 66 or directly on the lateral line 66. The offset distances of projections 54 and 56 indicated by d₁, d₂, d₃ and d₄ may each be of any distance that enables the projections 54 and 56 to interact with the lateral edges 64 of the weld pool. In practice, particularly suitable offset distances d₁, d₂, d₃ and d₄ have been found to be distances that place the location of the projections 54 and 56 within 10 millimeters of the center 60 of the projection 58.

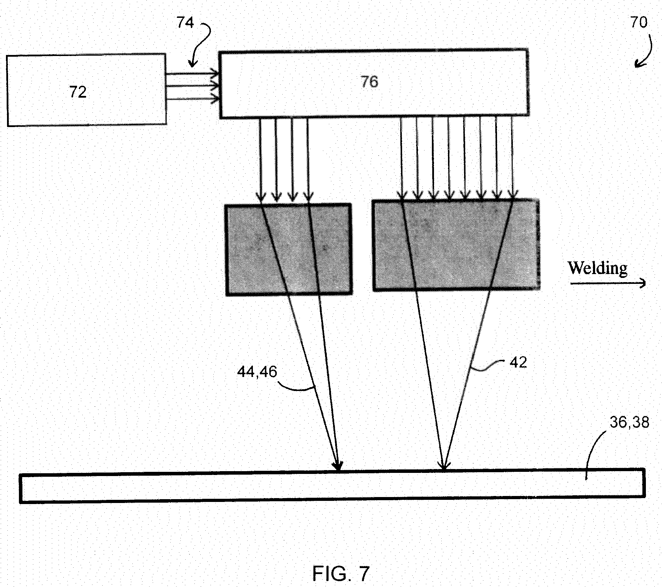

The power levels of the laser beams 42, 44 and 46 and the diameters and distances (d₁, d₂, d₃ and d₄) between their projections 52, 54 and 56 can be controlled and adjusted by generating each laser beam 42, 44 and 46 with a separate laser beam generator or by splitting one or more laser beams. Generating the separate laser beams 42, 44 and 46 by splitting a primary laser beam is preferred in view of the difficulty of closely placing three separate laser beam generators to produce the three parallel beams 42, 44 and 46. Accordingly, FIG. 7 represents an apparatus 70 that utilizes a single high-powered laser 72 for generating a primary laser beam 74, which is then split by a suitable beam splitter 76 (for example, a prism) to create the leading and lateral laser beams 42, 44 and 46. The splitter 76 can also serve to align and space the beams 42, 44 and 46 along and relative to the joint region defined by the faying surfaces 32 and 34, and to orient the beams 42, 44 and 46 to be parallel to each other and perpendicular to the surfaces 40 of the workpieces 36 and 38. Because the leading laser beam 42 is intended to be at a higher power level in order to deeply penetrate the workpieces 36 and 38, a greater proportion of the primary laser beam 74 is represented as being utilized to produce the leading laser beam 42 and a smaller proportion of the primary laser beam 74 is represented as being utilized to produce the lateral laser beams 44 and 46. As a nonlimiting example, if a 4 kW laser generator 72 is employed, the splitter 76 could be used to produce the leading laser beam 42 at a power level of about 2 kW and each of the two lateral beams 44 and 46 at a power level of about 1 kW. As another example, if a 8 kW laser generator 72 were to be employed, the splitter 76 could be used to produce the leading laser beam 42 at a power level of about 6 kW and each of the two lateral beams 44 and 46 at a power level of about 1 kW.

Optimal spacing among the laser beam projections 52, 54 and 56 will depend on their relative power levels and the particular application. However, experiments leading up to the present invention evidenced the importance of the power levels of the lateral laser beams 44 and 46 and the placement of their projections 54 and 56 in proximity to the lateral edges 64 of the molten weld pool within the arc projection 58. For this purpose, a series of trials were performed in which a MIG welder and a single lateral beam were operated to produce weld beads on specimens formed of stainless steel 304L. The welding speed for all trials was 60 inches (about 150 cm) per minute. A single lateral beam (corresponding to one of the beams 44 and 46) was utilized in the trials in order to provide a contrast between the weld toes and lateral edges at the opposite sides of the resulting weld beads. The MIG welder was operated at conditions that included a voltage of about 25V and a welding current of about 160 A, which resulted in an arc power of about 4 kW. Electrodes used in the welding process were formed of stainless steel filler metal ER308L. The lateral laser beam projection (corresponding to 54 or 56 in FIG. 6) had a diameter less than 2 millimeters. The projection of the lateral beam was maintained a distance of about five millimeters forward of the center (corresponding to 60 in FIG. 6) of the molten weld pool within the arc projection (corresponding to 58 in FIG. 6), and both its power level and lateral distance (corresponding to d₁ in FIG. 6) from the center of the molten weld pool (arc projection) were used as variables in the trials.

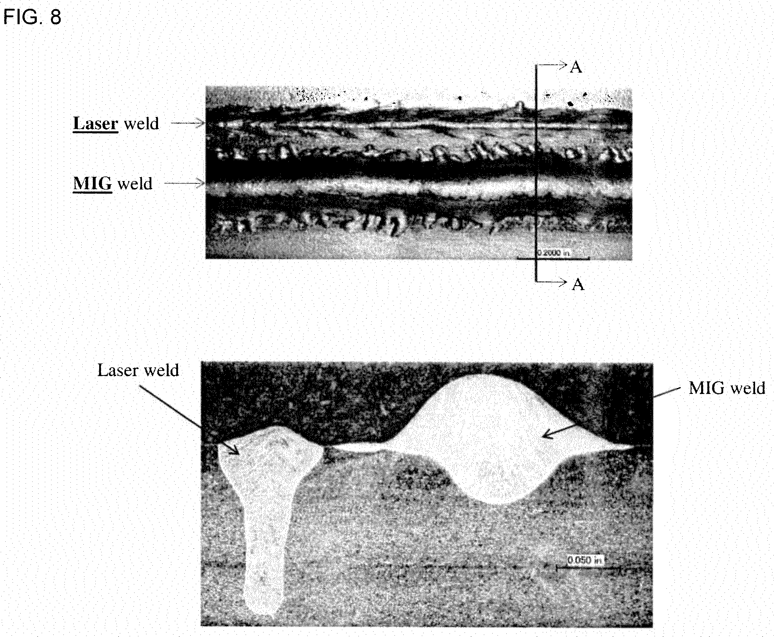

FIG. 8 represents the results of a first trial in which the lateral laser beam was at a power level of about 2 kW and its projection was located about 4.5 millimeter from the center of the MIG molten weld pool. FIG. 8 evidences that interaction did not occur between the weld bead produced by the electric arc and a deeper weld bead produced by the lateral laser beam, and the resulting weld toes and lateral edges of the weld bead formed by the electric arc were rough and irregular, respectively. Consequently, it was concluded that the lateral beam projection was not sufficiently close to the MIG molten weld pool to have any influence on the resulting weld bead.

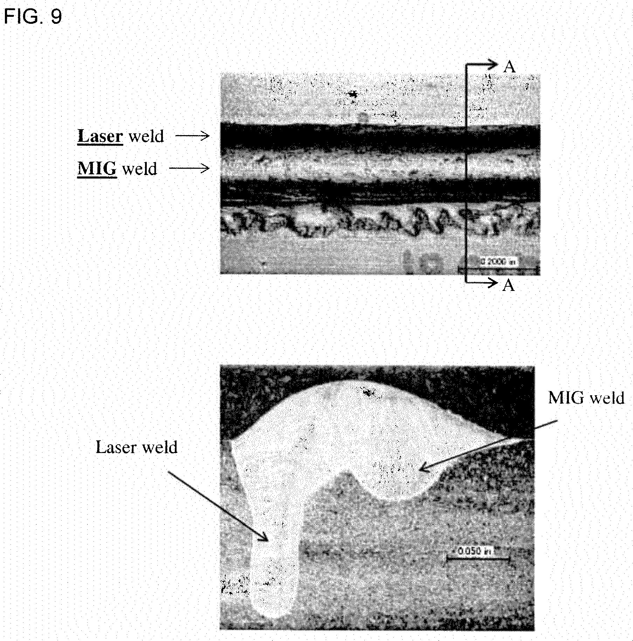

FIG. 9 represents the results of a second trial in which the lateral beam was again at a power level of about 2 kW, but its projection was located about 2.5 millimeter from the center of the MIG molten weld pool. FIG. 9 evidences that significant interaction occurred between the weld beads produced by the lateral laser beam and the electric arc, resulting in a region of the weld bead being formed by the combined effects of the laser beam and electric arc. In this trial, the resulting weld toe and lateral edge of the weld bead adjacent the lateral laser beam projection were smooth and uniform, respectively, especially relative to the opposite weld toe and lateral edge of the weld bead. Consequently, it was concluded that the lateral beam projection was sufficiently close to the molten weld pool to have a beneficial effect on the resulting weld bead.

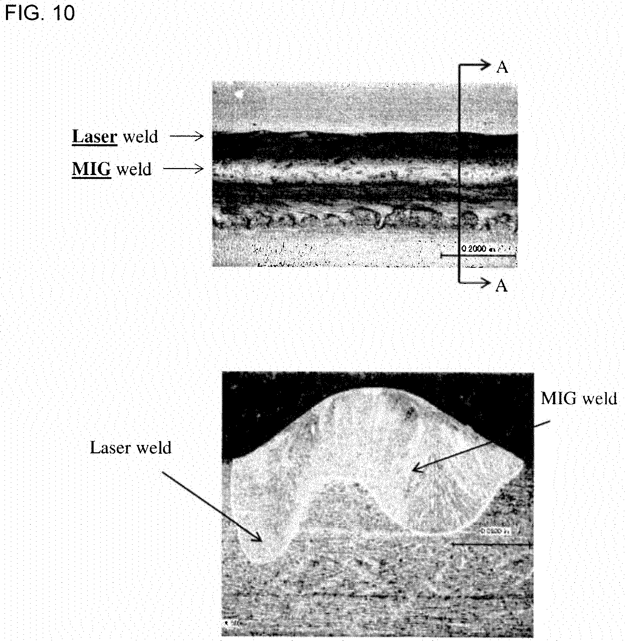

In a third trial represented in FIG. 10, the lateral beam projection was again located about 2.5 millimeter from the center of the MIG molten weld pool, but its power level was reduced to about 1 kW. FIG. 10 evidences that significant interaction still occurred between the weld beads produced by the lateral laser beam and the electric arc, and the resulting weld toe and lateral edge of the weld bead adjacent the lateral laser beam projection were smooth and uniform, respectively, especially relative to the opposite weld toe and lateral edge of the weld bead. Consequently, it was again concluded that the lateral beam projection was sufficiently close to the molten weld pool and at a sufficient power level to have a beneficial effect on the resulting weld bead.

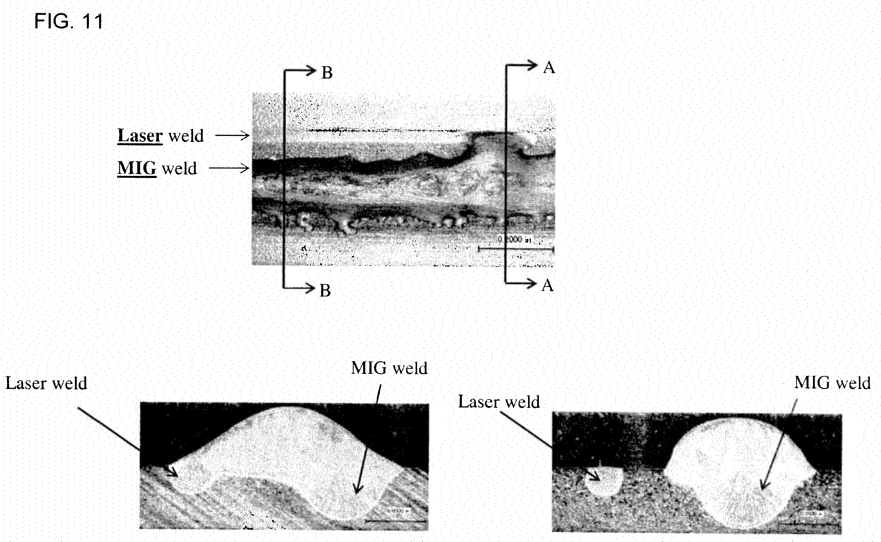

In a fourth trial represented in FIG. 11, the lateral beam projections were located about 2.5 millimeter from the center of the MIG molten weld pool, but their power levels were reduced to about 0.5 kW. FIG. 11 evidences that interaction did not occur between the weld beads produced by the lateral laser beam and the electric arc, and the resulting weld toes and lateral edges of the resulting weld bead were rough and irregular, respectively. Consequently, it was concluded that the lateral beam projection was not sufficiently close to the molten weld pool and/or its power level was too low to have any significant and beneficial influence on the resulting weld bead.

Under the particular test conditions used, it was concluded that the lateral laser beam (44/46) should be relatively closely spaced to the lateral edge of the arc projection, for example, within 2.5 millimeters of the lateral edge, and should be at a power level of about 1 kW or higher, to produce a weld joint whose weld toes are smooth and whose lateral edges are uniform.

While the invention has been described in terms of a preferred embodiment, it is apparent that other forms could be adopted by one skilled in the art. Accordingly, the scope of the invention is to be limited only by the following claims.

## Claims

1. A method of welding at least two workpieces together by metallurgically joining faying surfaces (32,34) of the workpieces (36,38), the method comprising:
placing the workpieces together (36,38) so that the faying surfaces (32,34) thereof face each other and a joint region is defined therebetween;
projecting a first laser beam (42) onto the joint region to produce a first laser beam projection (52) on adjacent surfaces (40) of the workpieces (36,38) and cause the first laser beam projection (52) to travel along the joint region and penetrate the joint region;
directing an electric arc (48) onto the adjacent surfaces (40) of the workpieces (32,34) to produce an arc projection (58) that encompasses the first laser beam projection (52) and travels therewith along the joint region, the first laser beam projection (52) and the arc projection (58) forming a molten weld pool capable of solidifying to form a weld joint in the joint region, wherein the first laser beam projection (52) and a center (60) of the arc projection (58) are projected onto a line (62);
projecting a pair of lateral laser beams (44,46) to produce lateral laser beam projections (54,56) that are encompassed by the arc projection (58) and travel therewith along the joint region behind the first laser beam projection (52), the lateral laser beam projections (54,56) interacting with and affecting portions of the molten weld pool that define lateral edges (64) of the molten weld pool, and wherein the pair of lateral laser beams (44,46) are perpendicularly offset from the line (62) by respective distances d₁ and d₂; and then
cooling the molten weld pool to form the weld joint (30) in the joint region and metallurgically join the workpieces (36,38) to yield a welded assembly, in order for the weld joint (30) to have uniform lateral weld bead edges (30B) and weld bead toes (30A) that define the lateral edges (64).

2. The method according to claim 1, wherein the first laser beam (42) is at a power level greater than each of the lateral laser beams (44,46).

3. The method according to claim 1 or 2, wherein the first laser beam (42) is at a power level of about 2 kW to about 20 kW.

4. The method according to any of claims 1 to 3, wherein the lateral laser beams (44,46) are at different power levels.

5. The method according to any of claim 1 to 4, wherein the first laser beam (42) penetrates a through-thickness of the workpieces (36,38) at the joint region and the lateral laser beams (44,46) do not penetrate the through-thickness of the workpieces (36,38) at the joint region.

6. The method according to any preceding claim, wherein the center (60) of the arc projection (58) and a center of the first laser beam (42) are located about 2 millimeters to about 20 millimeters apart along the joint (30) to be welded.

7. The method according to any preceding claim, wherein each of the lateral laser beams (44,46) is spaced from the center (60) of the arc projection (58) by a distance of less than 10 millimeters.

8. The method according to any preceding claim, wherein the first laser beam (42) and the lateral laser beams (44,46) are parallel to each other along the welding joint (30).

9. The method according to claim 8, wherein the first laser beam (42) and the lateral laser beams (44,46) are projected at an angle of about 70 to about 110 degrees to the adjacent surfaces (40) of the workpieces (36,38).

10. The method according to any preceding claim, wherein the molten weld pool is a molten material that exhibits lower fluidity and reduced wetting than molten mild, stainless and low-alloy steels.

11. An apparatus (70) for welding at least two workpieces (36,38) together by metallurgically joining faying surfaces (32,34) thereof that face each other to define a joint region therebetween, the apparatus comprising:
means adapted to generate and to project a first laser beam (42) onto the joint region to produce, in use, a first laser beam projection (52) on adjacent surfaces (40) of the workpieces (36,38) and means adapted to cause the first laser beam projection (52) to travel along the joint region and to penetrate the joint region;
means adapted to generate and to direct an electric arc (48) onto the adjacent surfaces (40) of the workpieces (36,38) to produce, in use, an arc projection (58) that encompasses the first laser beam projection (52) and that travels, in use, therewith along the joint region to form a molten weld pool capable of solidifying to form a weld joint (30) in the joint region, wherein the first laser beam projection (52) and a center (60) of the arc projection (58) are projected, in use, onto a line (62);
**characterized in that** the apparatus further comprises
means adapted to generate and to project a pair of lateral laser beams (44,46) to produce lateral laser beams projections (54,56), such that each lateral laser beam projection (54,56) is, in use, on a respective side of the line (62), that are, in use, encompassed by the arc projection (58) and travel, in use, therewith along the joint region and behind the first laser beam projection (52), the lateral laser beam projections (54, 56), in use, interacting with and affecting portions of the molten weld pool that define lateral edges (64) of the molten weld pool, and wherein the pair of lateral laser beams (44,46) are, in use, perpendicularly offset from the line (62) by respective distances d₁ and d₂.

12. The apparatus (70) according to claim 11, wherein the means adapted to generate and to project the first laser beam (42) and the means adapted to generate and to project the lateral laser beams (44,46) are adapted to produce, in use, the first laser beam (42) at a power level greater than each of the lateral laser beams (44,46).

13. The apparatus (70) according to any of claims 11 or 12, wherein each of the lateral laser beams (44,46) is spaced from the center (60) of the arc projection (58) by a distance of less than 10 millimeters.

14. The apparatus (70) according to any of claims 11 to 13, wherein the first laser beam (42) and the lateral laser beams (44,46) are parallel to each other along the welding joint (30).

15. The apparatus (70) according to any of claims 11 to 14, wherein the first laser beam (42) and the lateral laser beams (44,46) are projected at an angle of about 70 to about 110 degrees to the adjacent surfaces (40) of the workpieces (36,38).

## Patentansprüche

1. Verfahren zum Zusammenschweißen von zumindest zwei Werkstücken mittels metallurgischen Verbindens von Stoßflächen (32, 34) der Werkstücke (36, 38), wobei das Verfahren umfasst:
Zusammenlegen der Werkstücke (36, 38), sodass die Stoßflächen (32, 34) davon einander gegenüberliegen und dazwischen ein Verbindungsbereich definiert wird;
Projizieren eines ersten Laserstrahls (42) auf den Verbindungsbereich, um eine erste Laserstrahlprojektion (52) auf benachbarte Flächen (40) der Werkstücke (36, 38) zu erzeugen und die erste Laserstrahlprojektion (52) zu veranlassen, sich entlang des Verbindungsbereichs zu bewegen und den Verbindungsbereich zu durchdringen;
Richten eines Lichtbogens (48) auf die benachbarten Flächen (40) der Werkstücke (32, 34), um eine Lichtbogenprojektion (58) zu erzeugen, welche die erste Laserstrahlprojektion (52) umfasst und sich damit entlang des Verbindungsbereichs bewegt, wobei die erste Laserstrahlprojektion (52) und die Lichtbogenprojektion (58) ein geschmolzenes Schmelzbad bilden, welches geeignet ist, zu erstarren, um eine Schweißverbindung in dem Verbindungsbereich zu bilden, wobei die erste Laserstrahlprojektion (52) und ein Zentrum (60) der Lichtbogenprojektion (58) auf eine Linie (62) projiziert werden;
Projizieren eines Paares von seitlichen Laserstrahlen (44, 46), um seitliche Laserstrahlprojektionen (54, 56) zu erzeugen, welche von der Lichtbogenprojektion (58) umfasst werden und sich damit entlang des Verbindungsbereichs hinter der ersten Laserstrahlprojektion (52) bewegen, wobei die seitlichen Laserstrahlprojektionen (54, 56) mit Abschnitten des geschmolzenen Schmelzbades, welche seitliche Ränder (64) des geschmolzenen Schmelzbades definieren, interagieren und diese beeinflussen, und wobei das Paar von seitlichen Laserstrahlen (44, 46) durch entsprechende Abstände d₁ und d₂ von der Linie (62) senkrecht versetzt ist; und dann
Kühlen des geschmolzenen Schmelzbades, um die Schweißverbindung (30) in dem Verbindungsbereich zu bilden und die Werkstücke (36, 38) metallurgisch zu verbinden, um eine verschweißte Anordnung zu erhalten, sodass die Schweißverbindung (30) einheitliche seitliche Schweißraupenränder (30B) und Schweißraupengründe (30A) hat, welche die seitlichen Ränder (64) definieren.

2. Verfahren nach Anspruch 1, wobei der erste Laserstrahl (42) sich in einer Leistungsstufe befindet, welche größer ist als jede von den seitlichen Laserstrahlen (44, 46).

3. Verfahren nach Anspruch 1 oder 2, wobei der erste Laserstrahl (42) sich in einer Leistungsstufe von etwa 2 kW bis etwa 20 kW befindet.

4. Verfahren nach einem der Ansprüche 1 bis 3, wobei die seitlichen Laserstrahlen (44, 46) sich in unterschiedlichen Leistungsstufen befinden.

5. Verfahren nach einem der Ansprüche 1 bis 4, wobei der erste Laserstrahl (42) einen Dickendurchgang der Werkstücke (36, 38) an dem Verbindungsbereich durchdringt und die seitlichen Laserstrahlen (44, 46) den Dickendurchgang der Werkstücke (36, 38) an dem Verbindungsbereich nicht durchdringen.

6. Verfahren nach einem der vorstehenden Ansprüche, wobei das Zentrum (60) der Lichtbogenprojektion (58) und ein Zentrum des ersten Laserstrahls (42) sich etwa 2 Millimeter bis etwa 20 Millimeter entfernt entlang der zu schweißenden Verbindung (30) befinden.

7. Verfahren nach einem der vorstehenden Ansprüche, wobei jeder von den seitlichen Laserstrahlen (44, 46) von dem Zentrum (60) der Lichtbogenprojektion (58) durch einen Abstand von weniger als 10 Millimeter beabstandet ist.

8. Verfahren nach einem der vorstehenden Ansprüche, wobei der erste Laserstrahl (42) und die seitlichen Laserstrahlen (44, 46) parallel zueinander entlang der Schweißverbindung (30) sind.

9. Verfahren nach Anspruch 8, wobei der erste Laserstrahl (42) und die seitlichen Laserstrahlen (44, 46) in einem Winkel von etwa 70 bis etwa 110 Grad zu den benachbarten Flächen (40) der Werkstücke (36, 38) projiziert werden.

10. Verfahren nach einem der vorstehenden Ansprüche, wobei das geschmolzene Schmelzbad ein geschmolzenes Material ist, welches eine geringere Fluidität und verringerte Benetzung als geschmolzener Weichstahl, Edelstahl oder niedrig legierter Stahl zeigt.

11. Einrichtung (70) zum Zusammenschweißen von zumindest zwei Werkstücken (36, 38) mittels metallurgischen Verbindens von Stoßflächen (32, 34) davon, welche einander gegenüberliegen, um dazwischen einen Verbindungsbereich zu definieren, wobei die Einrichtung umfasst:
Mittel, welche adaptiert sind, einen ersten Laserstrahl (42) zu erzeugen und auf den Verbindungsbereich zu projizieren, und, im Gebrauch, eine erste Laserstrahlprojektion (52) auf benachbarte Flächen (40) der Werkstücke (36, 38) zu erzeugen, und
Mittel, welche adaptiert sind, die erste Laserstrahlprojektion (52) zu veranlassen, sich entlang des Verbindungsbereichs zu bewegen und den Verbindungsbereich zu durchdringen;
Mittel, welche adaptiert sind, einen Lichtbogen (48) zu erzeugen und auf die benachbarten Flächen (40) der Werkstücke (36, 38) zu richten, um , im Gebrauch, eine Lichtbogenprojektion (58) zu erzeugen, welche die erste Laserstrahlprojektion (52) umfasst, und welche sich, im Gebrauch, damit entlang des Verbindungsbereichs bewegt, um ein geschmolzenes Schmelzbad zu bilden, welches geeignet ist, zu erstarren, um eine Schweißverbindung (30) in dem Verbindungsbereich zu bilden, wobei die erste Laserstrahlprojektion (52) und ein Zentrum (60) der Lichtbogenprojektion (58), im Gebrauch, auf eine Linie (62) projiziert werden;
**dadurch gekennzeichnet, dass** die Einrichtung weiter umfasst
Mittel, welche adaptiert sind, ein Paar von seitlichen Laserstrahlen (44, 46) zu erzeugen und zu projizieren, um seitliche Laserstrahlprojektionen (54, 56) zu erzeugen, sodass jede seitliche Laserstrahlprojektion (54, 56), im Gebrauch, sich auf einer entsprechenden Seite der Linie (62) befindet, welche, im Gebrauch, von der Lichtbogenprojektion (58) umfasst sind und sich, im Gebrauch, damit entlang des Verbindungsbereichs und hinter der ersten Laserstrahlprojektion (52) bewegen, wobei die seitlichen Laserstrahlprojektionen (54, 56), im Gebrauch, mit Abschnitten des geschmolzenen Schmelzbades, welche seitliche Ränder (64) des geschmolzenen Schmelzbades definieren, interagieren und diese beeinflussen, und wobei das Paar von seitlichen Laserstrahlen (44, 46), im Gebrauch, durch entsprechende Abstände d₁ und d₂ von der Linie (62) senkrecht versetzt ist.

12. Einrichtung (70) nach Anspruch 11, wobei die Mittel, welche adaptiert sind, den ersten Laserstrahl (42) zu erzeugen und zu projizieren, und die Mittel, welche adaptiert sind, die seitlichen Laserstrahlen (44, 46) zu erzeugen und zu projizieren, adaptiert sind, im Gebrauch, den ersten Laserstrahl (42) in einer Leistungsstufe zu erzeugen, welche größer ist als jede von den seitlichen Laserstrahlen (44, 46).

13. Einrichtung (70) nach einem der Ansprüche 11 oder 12, wobei jeder von den seitlichen Laserstrahlen (44, 46) von dem Zentrum (60) der Lichtbogenprojektion (58) durch einen Abstand von weniger als 10 Millimeter beabstandet ist.

14. Einrichtung (70) nach einem der Ansprüche 11 oder 13, wobei der erste Laserstrahl (42) und die seitlichen Laserstrahlen (44, 46) parallel zueinander entlang der Schweißverbindung (30) sind.

15. Einrichtung (70) nach einem der Ansprüche 11 bis 14, wobei der erste Laserstrahl (42) und die seitlichen Laserstrahlen (44, 46) in einem Winkel von etwa 70 bis etwa 110 Grad zu den benachbarten Flächen (40) der Werkstücke (36, 38) projiziert werden.

## Revendications

1. Procédé de soudage d'au moins deux pièces conjointement par jonction métallurgique de surfaces d'affleurement (32, 34) des pièces (36, 38), le procédé comprenant :
le placement des pièces (36, 38) conjointement de sorte que leurs surfaces d'affleurement (32, 34) soient en regard l'une de l'autre et qu'une région de jonction soit définie entre elles ;
la projection d'un premier faisceau laser (42) sur la région de jonction pour produire une première projection de faisceau laser (52) sur des surfaces adjacentes (40) des pièces (36, 38) et amener la première projection de faisceau laser (52) à se déplacer le long de la région de jonction et à pénétrer dans la région de jonction ;
l'envoi d'un arc électrique (48) sur les surfaces adjacentes (40) des pièces (32, 34) pour produire une projection d'arc (58) qui comprend la première projection de faisceau laser (52) et se déplace avec celle-ci le long de la région de jonction, la première projection de faisceau laser (52) et la projection d'arc (58) formant un bain de soudure fondu capable de se solidifier pour former un joint soudé dans la région de jonction, dans lequel la première projection de faisceau laser (52) et un centre (60) de la projection d'arc (58) sont projetés sur une ligne (62) ;
la projection d'une paire de faisceaux laser latéraux (44, 46) pour produire des projections de faisceaux laser latéraux (54, 56) qui sont confinées par la projection d'arc (58) et se déplacent avec celle-ci le long de la région de jonction derrière la première projection de faisceau laser (52), les projections de faisceaux laser latéraux (54, 56) interagissant avec des parties du bain de soudure fondu et affectant celles-ci qui définissent des bords latéraux (64) du bain de soudure fondu, et dans lequel la paire de faisceaux laser latéraux (44, 46) est perpendiculairement décalée de la ligne (62) par des distances respectives d₁ et d₂ ; et ensuite
le refroidissement du bain de soudure fondu pour former le joint de soudure (30) dans la région de jonction et joindre au plan métallurgique les pièces (36, 38) pour obtenir un ensemble soudé afin que le joint de soudure (30) ait des bords de bourrelets de soudure latéraux uniformes (30B) et des pointes de bourrelets de soudure (30A) qui définissent les bords latéraux (64).

2. Procédé selon la revendication 1, dans lequel le premier faisceau laser (42) se trouve à un niveau d'énergie supérieur à celui de chacun des faisceaux laser latéraux (44, 46).

3. Procédé selon la revendication 1 ou 2, dans lequel le premier faisceau laser (42) se situe à un niveau d'énergie d'environ 2 kW à environ 20 kW.

4. Procédé selon l'une quelconque des revendications 1 à 3, dans lequel les faisceaux laser latéraux (44, 46) se situent à des niveaux d'énergie différents.

5. Procédé selon l'une quelconque des revendications 1 à 4, dans lequel le premier faisceau laser (42) pénètre sur une épaisseur totale des pièces (36, 38) dans la région de jonction et les faisceaux laser latéraux (44, 46) ne pénètrent pas sur toute l'épaisseur des pièces (36, 38) dans la région de jonction.

6. Procédé selon l'une quelconque des revendications précédentes, dans lequel le centre (60) de la projection d'arc (58) et un centre du premier faisceau laser (42) sont situés à environ 2 millimètres à environ 20 millimètres l'un de l'autre le long du joint (30) à souder.

7. Procédé selon l'une quelconque des revendications précédentes, dans lequel chacun des faisceaux laser latéraux (44, 46) est espacé du centre (60) de la projection d'arc (58) d'une distance de moins de 10 millimètres.

8. Procédé selon l'une quelconque des revendications précédentes, dans lequel le premier faisceau laser (42) et les faisceaux laser latéraux (44, 46) sont parallèles l'un à l'autre le long du joint de soudage (30).

9. Procédé selon la revendication 8, dans lequel le premier faisceau laser (42) et les faisceaux laser latéraux (44, 46) sont projetés sous un angle d'environ 70 à environ 110 degrés sur les surfaces adjacentes (40) des pièces (36, 38).

10. Procédé selon l'une quelconque des revendications précédentes, dans lequel le bain de soudure fondu est un matériau fondu qui présente une fluidité inférieure et un mouillage réduit par rapport à des aciers doux, inoxydables et faiblement alliés fondus.

11. Appareil (70) pour souder au moins deux pièces (36, 38) conjointement par jonction métallurgique de leurs surfaces d'affleurement (32, 34) qui sont en regard l'une de l'autre pour définir une région de jonction entre elles, l'appareil comprenant :
des moyens qui sont à même de générer et de projeter un premier faisceau laser (42) sur la région de jonction afin de produire en service une première projection de faisceau laser (52) sur des surfaces adjacentes (40) des pièces (36, 38) et des moyens qui sont à même d'amener la première projection de faisceau laser (52) à se déplacer le long de la région de jonction et à pénétrer dans la région de jonction ;
des moyens qui sont à même de générer et d'envoyer un arc électrique (48) sur les surfaces adjacentes (40) des pièces (36, 38) pour produire en service une projection d'arc (58) qui englobe la première projection de faisceau laser (52) et qui se déplace en service avec celle-ci le long de la région de jonction afin de former un bain de soudure fondu capable de se solidifier pour former un joint de soudure (30) dans la région de jonction, dans lequel la première projection de faisceau laser (52) et un centre (60) de la projection d'arc (58) sont projetés en service sur une ligne (62) ;
**caractérisé en ce que** l'appareil comprend en outre :
des moyens qui sont à même de générer et de projeter une paire de faisceaux laser latéraux (44, 46) pour produire des projections de faisceaux laser latéraux (54, 56) de sorte que chaque projection de faisceau laser latéral (54, 56) se situe en service sur un côté respectif de la ligne (62), qui sont en service confinés par la projection d'arc (58) et se déplacent en service avec celle-ci le long de la région de jonction et derrière la première projection de faisceau laser (52), les projections de faisceaux laser latéraux (54, 56) interagissant en service avec des parties du bain de soudure fondu et affectant celles-ci, qui définissent des bords latéraux (64) du bain de soudure fondu et
dans lequel les deux faisceaux laser latéraux (44, 46) sont en service décalés perpendiculairement de la ligne (62) de distances respectives d₁ et d₂.

12. Appareil (70) selon la revendication 11, dans lequel les moyens qui sont à même de générer et de projeter le premier faisceau laser (42) et les moyens qui sont à même de générer et de projeter les faisceaux laser latéraux (44, 46) sont à même de produire en service le premier faisceau laser (42) à un niveau d'énergie supérieur à celui de chacun des faisceaux laser latéraux (44, 46).

13. Appareil (70) selon l'une quelconque des revendications 11 ou 12, dans lequel chacun des faisceaux laser latéraux (44, 46) est espacé du centre (60) de la projection d'arc (58) d'une distance de moins de 10 millimètres.

14. Appareil (70) selon l'une quelconque des revendications 11 à 13, dans lequel le premier faisceau laser (42) et les faisceaux laser latéraux (44, 46) sont parallèles l'un à l'autre le long du joint de soudure (30).

15. Appareil (70) selon l'une quelconque des revendications 11 à 14, dans lequel le premier faisceau laser (42) et les faisceaux laser latéraux (44, 46) sont projetés sous un angle d'environ 70 à environ 110 degrés sur les surfaces adjacentes (40) des pièces (36, 38).
